# EUROPEAN PATENT SPECIFICATION

(11) **EP 3 971 558 B1**
(45) Date of publication and mention of the grant of the patent: **30.11.2022**
(21) Application number: 21195926.7
(22) Date of filing: 10.09.2021
(51) Int. Cl.: G01N 21/90

(54) **CONTROL UNIT AND METHOD TO CONTROL CONTAINERS**
STEUEREINHEIT UND VERFAHREN ZUR KONTROLLE VON BEHÄLTERN
UNITÉ DE COMMANDE ET PROCÉDÉ POUR CONTRÔLER DES RÉCIPIENTS

(30) Priority: 14.09.2020 IT 202000021637
(43) Date of publication of application: 23.03.2022
(73) Proprietor: G.D SOCIETA' PER AZIONI, 40133 Bologna (IT)
(72) Inventor: GIANESE, Giampaolo, 40133 Bologna (IT); MILANDRI, Francesco, 40133 Bologna (IT); MAGHERINI, Giada, 40133 Bologna (IT); GAMBERINI, Giuliano, 40133 Bologna (IT)
(74) Representative: Maccagnan, Matteo

(56) References cited:
- EP-A1- 3 095 719
- DE-A1-102014 216 576
- DE-U1-202015 001 463

## Description

### CROSS-REFERENCE TO RELATED APPLICATIONS

This patent application claims priority from Italian patent application no. 102020000021637 filed on September 14, 2020.

### TECHNICAL FIELD

The present invention relates to a control unit and method to control containers, namely bottles, small bottles, flasks, vials, carpules, etc. of various formats.

The present invention finds advantageous application in the control of bottles for products of the pharmaceutical industry, to which the following disclosure will make explicit reference thereby with no loss of generality.

### PRIOR ART

In the industry of bottle filling machines for products of the pharmaceutical industry it is known to use a control unit which carries out an optical control of the bottles after the filling thereof.

A typical bottle control unit (for example as described in patent application EP3095719A1) comprises a plurality of holding devices, each designed to house a bottle and designed to rotate the bottle on itself around a longitudinal rotation axis, a feeding drum which moves the holding devices along a circular control path, and at least one optical control device which is arranged alongside the feeding drum and designed to carry out an optical control of a bottle carried by a holding device as the holding device moves along the control path. The optical control device can be arranged in a fixed position next to the feeding drum, or it can be mounted on an auxiliary conveyor, which moves the optical control device back and forth parallel to the control path and along a segment of the control path so as to cause the control device to travel an operating stroke, in which the control device moves in a synchronous manner with the feeding drum from an initial position to a final position, and a following return stroke, in which the control device moves in the opposite direction relative to the feeding drum from the final position to the initial position.

Normally (for example as described in patent application DE102014216576A1), each holding device comprises a lower motorized support mounted in a rotary manner on which rests a lower segment of a bottle and an idle countering element which is mounted in a rotary manner and engages an upper segment of a bottle. It may happen that in a holding device the countering element has mechanical problems (for example as a result of dirt that penetrates between the bearings) and therefore, the countering element becomes blocked or in any case rotates with difficulty and therefore instead of rotating in a synchronous manner with the underlying bottle (set into rotation by the movement imparted by the lower support) it scrapes against the underlying bottle (risking damage to the bottle, causing the bottle to fall from the holding device, and, in the most fortunate case, rendering bottle control less effective).

It has therefore been proposed to insert, in each holding device, a corresponding movement sensor which is designed to detect the rotation movement of the countering element so as to check the correct rotation of the countering element (i.e., the synchronous rotation with the lower motorized support). However, a common feeding drum of a bottle control unit can comprise dozens of holding devices and therefore it is necessary to install in the feeding drum dozens of motion sensors at a relatively high cost (both for the purchase cost of the motion sensors, and for the cost of mounting the motion sensors).

The utility model DE202015001463U1 describes a container control unit comprising a plurality of holding devices, each moved by a conveyor, designed to house a container and to rotate the container on itself around a longitudinal rotation axis; the control unit also comprises a control device that detects the presence of the rotation of the holding devices.

### DESCRIPTION OF THE INVENTION

The object of the present invention is to provide a control unit and method to control containers that are easy and inexpensive to employ, i.e., which allow to control the correct rotation of the countering element of each holding device at a lower cost with respect to the known art.

According to the present invention, a control unit and a method to control containers are provided, according to what is claimed in the attached claims.

The claims describe embodiments of the present invention forming an integral part of the present description.

### BRIEF DESCRIPTION OF THE DRAWINGS

The present invention will now be described with reference to the attached drawings, which illustrate some non-limiting examples of embodiments wherein:
- Figure 1 is a schematic view of a bottle for products of the pharmaceutical industry;
- Figure 2 is a schematic plan view of a bottle control unit of the type illustrated in Figure 1;
- Figure 3 is a partial perspective view and with parts removed for clarity of a part of the control unit of Figure 2; and
- Figure 4 is a partial perspective view and with parts removed for clarity of a part of an alternative of the control unit of Figure 2.

### PREFERRED EMBODIMENTS OF THE INVENTION

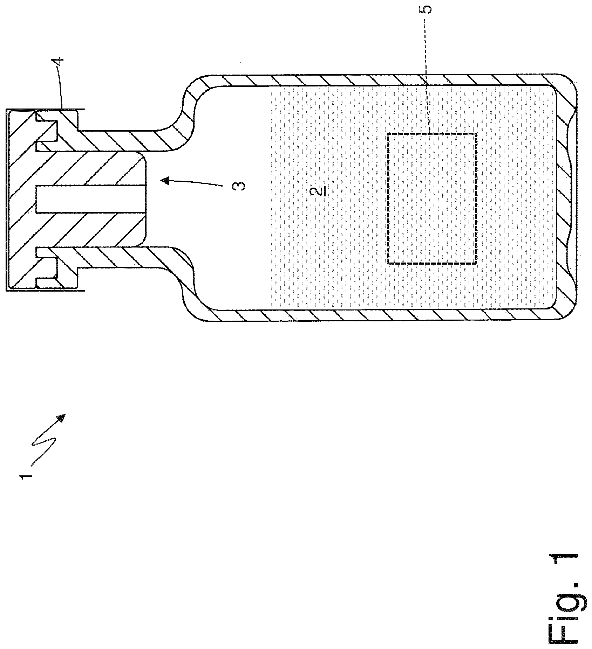

In Figure 1, number 1 denotes as a whole a container 1 (bottle, small bottle, flask, vial, carpula, syringe ...) for example, for a single-use (i.e., disposable which is therefore used only once and is then replaced) of a type known to contain a product 2 of the pharmaceutical industry (typically liquid or powder). The bottle 1 is closed by means of a cap 3, possibly covered with a plastic coating 4 which must be removed in order to remove the cap 3, and is optionally provided with (at least) one label 5, which is glued to an external surface of the bottle 1.

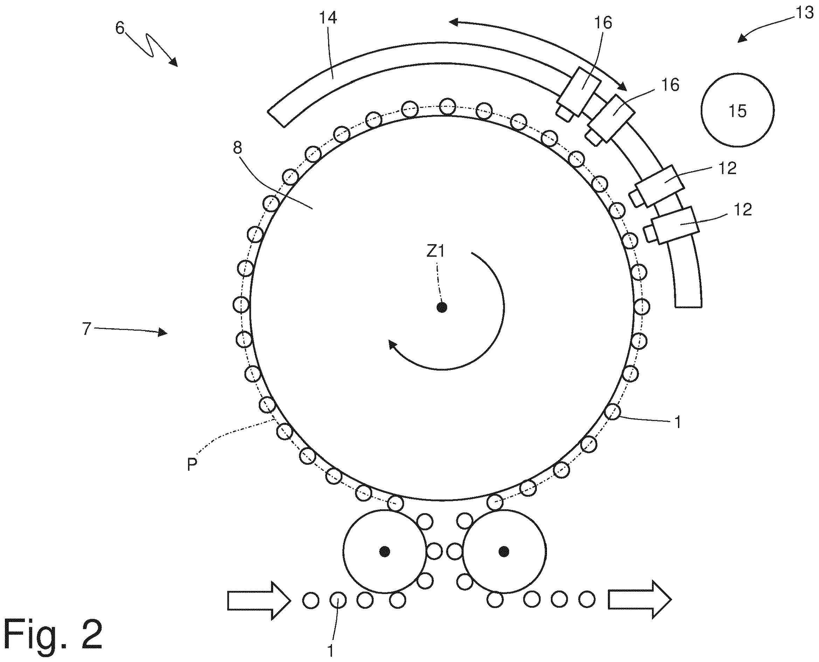

In Figure 2, number 6 denotes as a whole a control unit of a machine for filling containers 1; the control unit 6 is designed to carry out an optical control on each container 1 before or preferably after the container 1 is filled with a predetermined amount of product 2 in a filling station of the machine for filling containers 1.

The control unit 6 comprises a rotary feeding conveyor 7 which moves the containers 1 along a control path P, along which each container 1 is subjected to an optical control. In particular, the feeding conveyor 7 comprises a drum 8 which is mounted in a rotary manner with continuous motion around a vertical rotation axis Z1 (perpendicular to the plane of Figure 1) and a plurality of holding devices 9 (illustrated in Figure 2) which are arranged along the periphery of the drum 8: each holding device 9 is designed to house a container 1 and to rotate the container 1 on itself around a longitudinal rotation axis Z2 (which is vertical and parallel to the rotation axis Z1 and is illustrated in Figure 2).

According to what is illustrated in Figure 2, each holding device 9 comprises a lower support 10, which is mounted in a rotary manner around a corresponding rotation axis Z2 and on which a lower portion of a container 1 rests, and a countering element 11, which is mounted in a rotary manner around the corresponding rotation axis Z2 and engages an upper portion of a container 1 (obviously the countering element 11 is coaxial with the underlying lower support 10).

In each holding device 9 the lower support 10 is motorized, i.e., it is connected to a motor (typically an electric motor), which applies a driving torque to the lower support 10 to rotate the lower support 10. According to a possible embodiment, each lower support 10 can comprise its own electric motor carried by the drum 8 or the same electric motor carried by the drum 8 could rotate two or more lower supports 10 close to one another.

In each holding device 9 the countering element 11 is vertically movable (i.e. along the rotation axis Z2) to move between a receiving/release position, in which the countering element 11 is detached from the upper segment of a corresponding container 1 and a holding position (illustrated in Figure 2), in which the countering element 11 presses with a given (calibrated) force on the upper segment of a corresponding container 1 to press the container 1 against the lower support 10 and maintain the container 1 locked in the holding device 9.

In each holding device 9, the countering element 11 is mounted idle to rotate freely (i.e., without the application of any type of torque) around the rotation axis Z2; in use, the lower motorized support 10 is set into rotation around the rotation axis Z2 by the corresponding motor and then transmits the rotation motion to the container 1, which in turn transmits the rotation motion to the countering element 11 (which, by being mounted idle, passively follows the rotation motion of the container 1).

According to what is illustrated in Figure 1, the control unit 6 comprises two twin and side-by-side control devices 12, each designed to carry out an optical control of a corresponding container 1 carried by a holding device 9; the two control devices 12 operate in parallel, i.e., they are made to operate together to carry out at the same time the optical control of two side-by-side containers 1.

The control unit 6 comprises, furthermore, an auxiliary conveyor 13 which supports and moves the two control devices 12 back and forth parallel to the control path P and along a segment of the control path P so as to impart to the devices 12 a control operating stroke, in which the control devices 12 move in a synchronous manner with the feeding conveyor 7 from an initial position to a final position, and a following return stroke, in which the control devices 12 move in the opposite direction to the feeding conveyor 7 from the final position to the initial position. Obviously, the two control devices 12 carry out the optical control of two corresponding containers 1 carried by two holding devices 9 during an operating stroke (during which the two control devices 12 move in a synchronous manner with the two corresponding containers 1 and therefore *"spot"* the two stationary containers 1), whereas they do not carry out any optical controls during a return stroke.

In particular, the auxiliary conveyor 13 comprises a support body 14 shaped like an arc of circumference (the so-called *"boomerang")* or like a ring and which is mounted alongside the drum 8 to rotate around the rotation axis Z1 and supports the two control devices 12. Furthermore, the auxiliary conveyor 13 comprises an actuator device 15 which cyclically rotates the support body 14 back and forth; the actuator device 15 can be completely mechanically independent with respect to the rotational motion of the drum 14 (i.e., it can be synchronized to the rotational motion of the drum 14 only electronically by means of the control chain), or the actuator device 15 can mechanically obtain the motion from the rotation motion of the drum 14.

The control unit 6 comprises two twin and side-by-side control devices 16 which are mounted on the support body 14 of the auxiliary conveyor 13 beside the two control devices 12; i.e., the two control devices 16 are carried by the auxiliary conveyor 13 (together with the control devices 12) to move cyclically back and forth parallel to the control path P, alternating operating and return strokes. Each control device 16 is designed to detect the presence (and also the speed) of rotation of a countering element 11 of a holding device 9 while the control device 16 moves in a synchronous manner with the feeding conveyor 7 during an operational stroke; the two control devices 16 also operate in parallel, i.e., they are made to work together to carry out at the same time the optical control of the rotation of two side-by-side countering elements 11.

Preferably, the control devices 16 are arranged upstream of the control devices 12, so as to preliminarily check, by means of a control device 16, the correct functioning of the rotation in a holding device 9 before using the rotation of the device 9 to carry out, by means of a control device 12, the optical control of a container 1 carried by the holding device 9.

In the embodiment illustrated in the attached figures, each control device 16 is an optical control device designed to frame a countering element 11 of a holding device 9; in particular, the countering element 11 of each holding device 9 is externally provided with a graphic element 17 (illustrated in Figure 2) having an asymmetry around the rotation axis Z2 so as to highlight a rotation movement (for example the graphic element 17 could show an alternation of black and white stripes).

According to a different embodiment not illustrated, each control device 16 could be an inductive control device; in this embodiment, each countering element 11 is externally provided with a plurality of protrusions made of ferromagnetic material (in said embodiment, the control device 16 is made by means of a sort of phonic wheel) whose position is detected by the control device 16. In particular, the protrusions of the countering element 11 of each holding device 9 are arranged in a ring-like manner around the rotation axis Z2 so as to highlight a rotation movement.

According to a further embodiment not illustrated, each control device 16 comprises a magnetic sensor and a plurality of magnets arranged on the countering element 11 of a holding device 9. In particular, the magnets are arranged on the countering element 11 of each holding device 9 in a ring-like manner around the rotation axis Z2 so as to highlight a rotation movement.

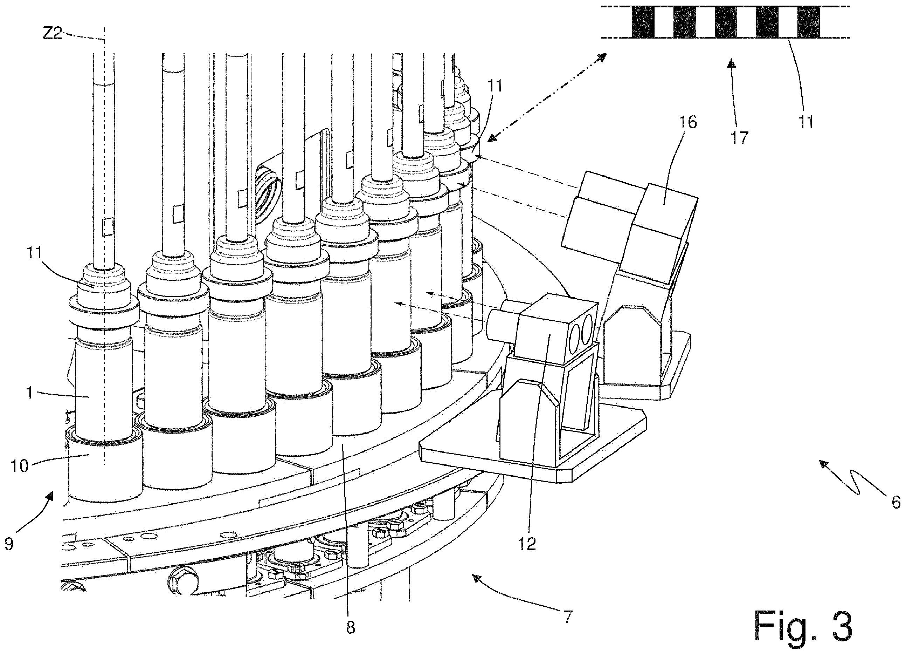

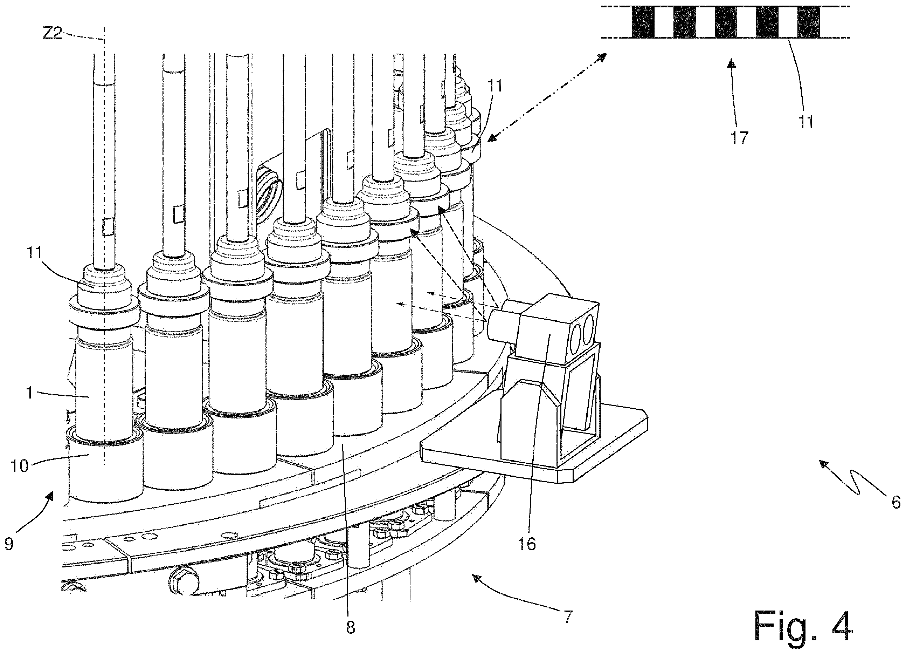

In the embodiment illustrated in Figure 3, two control devices 12 are provided, which carry out an optical control of the containers 1 and two control devices 16 are provided, which detect the presence of rotation (and also the rotation speed) of the countering elements 11; in the alternative embodiment illustrated in Figure 4, only the two control devices 16 are provided, both of which carry out an optical control of the containers 1 and detect the presence of rotation of the countering elements 11. In other words, in the alternative embodiment illustrated in Figure 4, the function of the control devices 12 is carried out by the control devices 16 which must therefore carry out a double function: the optical control of the containers 1 and also the detection of the presence of rotation of the contrast elements 11.

In the embodiment illustrated in the attached figures, two control devices 12 operating in parallel and two control devices 16 operating in parallel are provided; obviously the number of control devices 12 and 16 could be different: for example, only one control device 12 could be provided, only one control device 16 could be provided, three or more control devices 12 could be provided, or three or more control devices 16 could be provided (furthermore the number of control devices 12 could be different from the number of control devices 16, for example three control devices 12 and two control devices 16 could be provided).

With reference to Figures 2 and 3, it is important to note that the holding devices 9 are set into rotation around the corresponding rotation axes Z2 when they are framed by the control devices 16 to impart a rotation to the respective containers 1, functional to the subsequent optical control of the containers 1 carried out by the control devices 12; i.e., to carry out a so-called *"particle control"* a container 1 is set into rotation at high speed upstream of the control devices 12 (i.e., at the control devices 16) and subsequently at the control devices 12 it is abruptly stopped to acquire (by means of the control devices 12) images showing the inertial movement of the contents inside the container 1. Alternatively, the holding devices 9 are set into rotation around the corresponding rotation axes Z2 when they are framed by the control devices 16 only and exclusively to allow the control devices 16 to control the correct rotation of the countering elements 11.

With reference to Figure 4, it is important to note that the control devices 16 can be used both to control the containers 1 and to control the correct rotation of the countering elements 11 only when the optical control, carried out by the control devices 16, provides for the containers 1 to be set into (slow) rotation around the corresponding rotation axes Z2, i.e., to carry out a so-called *"cosmetic control"* which requires framing the entire circumferential development of the containers 1.

The embodiments described herein can be combined with one another without departing from the scope of the present invention.

The control unit 6 described above has numerous advantages.

In particular, the control unit 6 described above has a lower manufacture cost than a similar known control unit 6 since for all the holding devices 9 of the drum 8 (which may even be a few tens) only two control devices 16 are needed, which are capable of cyclically checking the correct rotation of the countering elements 11 of all the holding devices 9.

Furthermore, the control devices 16, by being able to operate when they move in a synchronous manner with the feeding conveyor 7, can check in a simple but very effective way the correct rotation of the countering elements 11 of the holding devices 9 also when the control devices 16 are relatively simple and inexpensive.

## Claims

1. A control unit (6) to control containers (1) comprising:
a plurality of holding devices (9), each designed to house a container (1) and designed to rotate the container (1) on itself around a first longitudinal rotation axis (Z2);
a feeding conveyor (7), which moves the holding devices (9) along a control path (P);
at least one first control device (16); and
an auxiliary conveyor (13), which moves the first control device (16) back and forth parallel to the control path (P) and along a segment of the control path (P) so as to cause the first control device (16) to travel an operating stroke, in which the first control device (16) moves in a synchronous manner with the feeding conveyor (7) from an initial position to a final position, and a following return stroke, in which the first control device (16) moves in an opposite direction relative to the feeding conveyor (7) from the final position to the initial position;
wherein each holding device (9) comprises a lower support (10), which is mounted in a rotary manner and on which a lower portion of a container (1) rests, and a countering element (11), which is mounted in a rotary manner and engages an upper portion of a container (1);
the control unit (6) is **characterized in that** the first control device (16) carried by the auxiliary conveyor (13) is designed to detect the presence of rotation of a countering element (11) of a holding device (9) while the first control device (16) moves in a synchronous manner with the feeding conveyor (7) during an operating stroke.

2. The control unit (6) according to claim 1, wherein the first control device (16) is designed to detect the rotation speed of a countering element (11) of a holding device (9) while the first control device (16) moves in a synchronous manner with the feeding conveyor (7) during an operating stroke.

3. The control unit (6) according to claim 1 or 2, wherein the first control device (16) is an optical control device and is designed to frame a countering element (11) of a holding device (9) .

4. The control unit (6) according to claim 3, wherein the countering element (11) of each holding device (9) has, on the outside, a graphic element (17) having an asymmetry around the first rotation axis (Z2) so as to highlight a rotation movement.

5. The control unit (6) according to claim 3 or 4, wherein the first control device (16) is designed to also carry out an optical control of a container (1) carried by a holding device (9) while the first control device (16) moves in a synchronous manner with the feeding conveyor (7) during an operating stroke.

6. The control unit (6) according to claim 1 or 2, wherein the first control device (16) is an inductive control device.

7. The control unit (6) according to claim 1, 2, 3 or 4 and comprising a second control device (12), which is mounted on the auxiliary conveyor (13) beside the first control device (16) and is designed to carry out an optical control of a container (1) carried by a holding device (9) while the second control device (12) moves in a synchronous manner with the feeding conveyor (7) during an operating stroke.

8. The control unit (6) according to claim 7, wherein the control device (16) is designed to detect the presence of rotation of a countering element (11) of a first holding device (9), whereas the second control device (12) is designed to carry out an optical control of a container (1) carried by a second holding device (9) arranged downstream of the first holding device (9) relative to the moving direction of the feeding conveyor (7).

9. The control unit (6) according to one of the claims from 1 to 8 and comprising at least two first control devices (16), which are arranged beside one another, are both carried by the auxiliary conveyor (13) and are designed to operate simultaneously in order to detect the presence of rotation of the countering elements (11) of two corresponding holding devices (9).

10. The control unit (6) according to one of the claims from 1 to 9, wherein the feeding conveyor (7) comprises a drum (8), which supports the holding devices (9) and is mounted so as to rotate around a second rotation axis (Z1) parallel to the first rotation axis (Z2).

11. A control method to control containers (1) comprising the steps of:
moving, by means of a feeding conveyor (7) and along a control path (P), a plurality of holding devices (9), each designed to house a container (1) and designed to rotate the container (1) on itself around a longitudinal rotation axis (Z2);
moving, by means of an auxiliary conveyor (13), at least one control device (16) back and forth parallel to the control path (P) and along a segment of the control path (P) so as to cause the control device (16) to travel an operating stroke, in which the control device (16) moves in a synchronous manner with the feeding conveyor (7) from an initial position to a final position, and a following return stroke, in which the control device (16) moves in an opposite direction relative to the feeding conveyor (7) from the final position to the initial position;
wherein each holding device (9) comprises a lower support (10), which is mounted in a rotary manner and on which a lower portion of a container (1) rests, and a countering element (11), which is mounted in a rotary manner and engages an upper portion of a container (1);
the control method is **characterized in that** it comprises the further step of detecting the presence of rotation of a countering element (11) of a holding device (9) by means of the control device (16) carried by the auxiliary conveyor (13) and while the control device (16) moves in a synchronous manner with the feeding conveyor (7) during an operating stroke.

## Patentansprüche

1. Kontrolleinheit (6) zum Kontrollieren von Behältern (1), umfassend:
mehrere Haltevorrichtungen (9), wovon jede ausgelegt ist, einen Behälter (1) aufzunehmen, und ausgelegt ist, den Behälter (1) um sich selbst um eine erste longitudinale Drehachse (Z2) zu drehen;
einen Zuführförderer (7), der die Haltevorrichtungen (9) längs eines Kontrollpfads (P) bewegt;
wenigstens eine erste Kontrollvorrichtung (16); und
einen zusätzlichen Förderer (13), der die erste Kontrollvorrichtung (16) parallel zum Kontrollpfad (P) und längs eines Segments des Kontrollpfads (P) vorwärts und rückwärts bewegt, um zu veranlassen, dass die erste Kontrollvorrichtung (16) einen Arbeitshub, bei dem sich die erste Kontrollvorrichtung (16) synchron mit dem Zuführförderer (7) von einer Startposition zu einer Endposition bewegt, und einen darauffolgenden Rückhub, bei dem sich die erste Kontrollvorrichtung (16) in einer entgegengesetzten Richtung relativ zum Zuführförderer (7) von der Endposition zur Startposition bewegt, ausführt;
wobei jede Haltevorrichtung (9) einen unteren Träger (10), der drehbar montiert ist und auf dem ein unterer Abschnitt eines Behälters (1) aufliegt, und ein Gegenelement (11), das drehbar montiert ist und mit einem oberen Abschnitt eines Behälters (1) in Eingriff gelangt, umfasst;
wobei die Kontrolleinheit (6) **dadurch gekennzeichnet ist, dass** die erste Kontrollvorrichtung (16), die durch den zusätzlichen Förderer (13) getragen wird, ausgelegt ist, das Vorliegen einer Drehung eines Gegenelements (11) einer Haltevorrichtung (9) zu detektieren, wobei sich die erste Kontrollvorrichtung (16) während eines Arbeitshubs synchron mit dem Zuführförderer (7) bewegt.

2. Kontrolleinheit (6) nach Anspruch 1, wobei die erste Kontrollvorrichtung (16) ausgelegt ist, die Drehzahl eines Gegenelements (11) einer Haltevorrichtung (9) zu detektieren, wobei sich die erste Kontrollvorrichtung (16) während eines Arbeitshubs synchron mit dem Zuführförderer (7) bewegt.

3. Kontrolleinheit (6) nach Anspruch 1 oder 2, wobei die erste Kontrollvorrichtung (16) eine optische Kontrollvorrichtung ist und ausgelegt ist, ein Gegenelement (11) einer Haltevorrichtung (9) zu erfassen.

4. Kontrolleinheit (6) nach Anspruch 3, wobei das Gegenelement (11) jeder Haltevorrichtung (9) an der Außenseite ein grafisches Element (17) hat, das eine Asymmetrie um die erste Drehachse (Z2) hat, um eine Drehbewegung zu visualisieren.

5. Kontrolleinheit (6) nach Anspruch 3 oder 4, wobei die erste Kontrollvorrichtung (16) ausgelegt ist, außerdem eine optische Kontrolle eines Behälters (1), der durch eine Haltevorrichtung (9) getragen wird, auszuführen, wobei sich die erste Kontrollvorrichtung (16) während eines Arbeitshubs synchron mit dem Zuführförderer (7) bewegt.

6. Kontrolleinheit (6) nach Anspruch 1 oder 2, wobei die erste Kontrollvorrichtung (16) eine induktive Kontrollvorrichtung ist.

7. Kontrolleinheit (6) nach Anspruch 1, 2, 3 oder 4 und umfassend eine zweite Kontrollvorrichtung (12), die am zusätzlichen Förderer (13) neben der ersten Kontrollvorrichtung (16) montiert ist und ausgelegt ist, eine optische Kontrolle eines Behälters (1), der durch eine Haltevorrichtung (9) getragen wird, auszuführen, wobei sich die zweite Kontrollvorrichtung (12) während eines Arbeitshubs synchron mit dem Zuführförderer (7) bewegt.

8. Kontrolleinheit (6) nach Anspruch 7, wobei die Kontrollvorrichtung (16) ausgelegt ist, das Vorliegen einer Drehung eines Gegenelements (11) einer ersten Haltevorrichtung (9) zu detektieren, wohingegen die zweite Kontrollvorrichtung (12) ausgelegt ist, eine optische Kontrolle eines Behälters (1) auszuführen, der durch eine zweite Haltevorrichtung (9), die relativ zur Bewegungsrichtung des Zuführförderers (7) stromabwärts der ersten Haltevorrichtung (9) angeordnet ist, getragen wird.

9. Kontrolleinheit (6) nach einem der Ansprüche 1 bis 8 und umfassend wenigstens zwei erste Kontrollvorrichtungen (16), die nebeneinander angeordnet sind, die beide durch den zusätzlichen Förderer (13) getragen werden und ausgelegt sind, gleichzeitig betrieben zu werden, um das Vorliegen einer Drehung der Gegenelemente (11) von zwei entsprechenden Haltevorrichtungen (9) zu detektieren.

10. Kontrolleinheit (6) nach einem der Ansprüche 1 bis 9, wobei der Zuführförderer (7) eine Trommel (8) umfasst, die die Haltevorrichtungen (9) trägt und so montiert ist, um sich um eine zweite Drehachse (Z1) parallel zur ersten Drehachse (Z2) zu drehen.

11. Kontrollverfahren zum Kontrollieren von Behältern (1), umfassend die Schritte:
Bewegen mehrerer Haltevorrichtungen (9) mittels eines Zuführförderers (7) und längs eines Kontrollpfads (P), wovon jede ausgelegt ist, einen Behälter (1) aufzunehmen, und ausgelegt ist, den Behälter (1) um sich selbst um eine longitudinale Drehachse (Z2) zu drehen;
Bewegen wenigstens einer Kontrollvorrichtung (16) mittels eines zusätzlichen Förderers (13) rückwärts und vorwärts parallel zum Kontrollpfad (P) und längs eines Segments des Kontrollpfads (P), um zu veranlassen, dass die Kontrollvorrichtung (16) einen Arbeitshub, bei dem sich die Kontrollvorrichtung (16) synchron mit dem Zuführförderer (7) von einer Startposition zu einer Endposition bewegt, und einen nachfolgenden Rückhub, bei dem sich die Kontrollvorrichtung (16) in einer entgegengesetzten Richtung relativ zum Zuführförderer (7) von der Endposition zur Startposition bewegt, ausführt;
wobei jede Haltevorrichtung (9) einen unteren Träger (10), der drehbar montiert ist und auf dem ein unterer Abschnitt eines Behälters (1) aufliegt, und ein Gegenelement (11), das drehbar montiert ist und mit einem oberen Abschnitt eines Behälters (1) in Eingriff gelangt, umfasst;
wobei das Kontrollverfahren **dadurch gekennzeichnet ist, dass** es den weiteren Schritt des Detektierens des Vorliegens einer Drehung eines Gegenelements (11) einer Haltevorrichtung (9) mittels der Kontrollvorrichtung (16), die durch den zusätzlichen Förderer (13) getragen wird, und wobei sich die Kontrollvorrichtung (16) während eines Arbeitshubs synchron mit dem Zuführförderer (7) bewegt, umfasst.

## Revendications

1. Unité de contrôle (6) pour contrôler des récipients (1) comprenant :
une pluralité de dispositifs de support (9), chacun conçu pour loger un récipient (1) et conçu pour faire tourner le récipient (1) sur lui-même autour d'un premier axe de rotation longitudinal (Z2) ;
un transporteur d'alimentation (7) qui déplace les dispositifs de support (9) le long d'un parcours de contrôle (P) ;
au moins un premier dispositif de contrôle (16) ; et
un transporteur auxiliaire (13) qui déplace le premier dispositif de contrôle (16) en avant et en arrière parallèlement au parcours de contrôle (P) et le long d'un segment du parcours de contrôle (P) afin d'amener le premier dispositif de contrôle (16) à se déplacer sur une course opérationnelle dans laquelle le premier dispositif de contrôle (16) se déplace d'une manière synchrone avec le transporteur d'alimentation (7) d'une position initiale à une position finale, et une course de retour successive dans laquelle le premier dispositif de contrôle (16) se déplace dans une direction opposée par rapport au transporteur d'alimentation (7) de la position finale à la position initiale ;
dans laquelle chaque dispositif de support (9) comprend un support inférieur (10) qui est monté d'une manière rotative et sur lequel une partie inférieure d'un récipient (1) repose, et un élément de contraste (11) qui est monté d'une manière rotative et met en prise une partie supérieure d'un récipient (1) ;
l'unité de contrôle (6) est **caractérisée en ce que** le premier dispositif de contrôle (16) porté par le transporteur auxiliaire (13) est conçu pour détecter la présence de rotation d'un élément de contraste (11) d'un dispositif de support (9) alors que le premier dispositif de contrôle (16) se déplace d'une manière synchrone avec le transporteur d'alimentation (7) pendant une course opérationnelle.

2. Unité de contrôle (6) selon la revendication 1, dans laquelle le premier dispositif de contrôle (16) est conçu pour détecter la vitesse de rotation d'un élément de contraste (11) d'un dispositif de support (9) alors que le premier dispositif de contrôle (16) se déplace d'une manière synchrone avec le transporteur d'alimentation (7) pendant une course opérationnelle.

3. Unité de contrôle (6) selon la revendication 1 ou 2, dans laquelle le premier dispositif de contrôle (16) est un dispositif de contrôle optique et est conçu pour encadrer un élément de contraste (11) d'un dispositif de support (9).

4. Unité de contrôle (6) selon la revendication 3, dans laquelle l'élément de contraste (11) de chaque dispositif de support (9) a, à l'extérieur, un élément graphique (17) ayant une asymétrique autour du premier axe de rotation (Z2) afin de mettre en évidence un mouvement de rotation.

5. Unité de contrôle (6) selon la revendication 3 ou 4, dans laquelle le premier dispositif de contrôle (16) est conçu pour réaliser également un contrôle optique d'un récipient (1) porté par un dispositif de support (9) alors que le premier dispositif de contrôle (16) se déplace d'une manière synchrone avec le transporteur d'alimentation (7) pendant une course opérationnelle.

6. Unité de contrôle (6) selon la revendication 1 ou 2, dans laquelle le premier dispositif de contrôle (16) est un dispositif de contrôle inductif.

7. Unité de contrôle (6) selon la revendication 1, 2, 3 ou 4 et comprenant un second dispositif de contrôle (12) qui est monté sur le transporteur auxiliaire (13) à côté du premier dispositif de contrôle (16) et est conçu pour réaliser un contrôle optique d'un récipient (1) porté par un dispositif de support (9) alors que le second dispositif de contrôle (12) se déplace d'une manière synchrone avec le transporteur d'alimentation (7) pendant une course opérationnelle.

8. Unité de contrôle (6) selon la revendication 7, dans laquelle le dispositif de contrôle (16) est conçu pour détecter la présence de rotation d'un élément de contraste (11) d'un premier dispositif de support (9), alors que le second dispositif de contrôle (12) est conçu pour réaliser un contrôle optique d'un récipient (1) porté par un second dispositif de support (9) agencé en aval du premier dispositif de support (9) par rapport à la direction de déplacement du transporteur d'alimentation (7).

9. Unité de contrôle (6) selon l'une des revendications 1 à 8 et comprenant au moins deux dispositifs de contrôle (16) qui sont agencés l'un à côté de l'autre, sont tous deux portés par le transporteur auxiliaire (13) et sont conçus pour fonctionner simultanément afin de détecter la présence de rotation des éléments de contraste (11) des deux dispositifs de support (9) correspondants.

10. Unité de contrôle (6) selon l'une des revendications 1 à 9, dans laquelle le transporteur d'alimentation (7) comprend un tambour (8) qui supporte les dispositifs de support (9) et est monté afin de tourner autour d'un second axe de rotation (Z1) parallèle au premier axe de rotation (Z2).

11. Procédé de contrôle pour contrôler des récipients (1) comprenant les étapes suivantes :
déplacer, au moyen d'un transporteur d'alimentation (7) et le long d'un parcours de contrôle (P), une pluralité de dispositifs de support (9), chacun conçu pour loger un récipient (1) et conçu pour faire tourner le récipient (1) sur lui-même autour d'un axe de rotation longitudinal (Z2) ;
déplacer, au moyen d'un transporteur auxiliaire (13), au moins un dispositif de contrôle (16) en avant et en arrière parallèlement au parcours de contrôle (P) et le long d'un segment du parcours de contrôle (P) afin d'amener le dispositif de contrôle (16) à se déplacer sur une course opérationnelle, dans laquelle le dispositif de contrôle (16) se déplace d'une manière synchrone avec le transporteur d'alimentation (7) d'une position initiale à une position finale, et une course de retour successive, dans laquelle le dispositif de contrôle (16) se déplace dans une direction opposée par rapport au transporteur d'alimentation (7) de la position finale à la position initiale ;
dans lequel chaque dispositif de support (9) comprend un support inférieur (10) qui est monté d'une manière rotative et sur lequel une partie inférieure d'un récipient (1) repose, et un élément de contraste (11) qui est monté d'une manière rotative et met en prise une partie supérieure d'un récipient (1) ;
le procédé de contrôle est **caractérisé en ce qu'**il comprend l'étape supplémentaire pour détecter la présence de rotation d'un élément de contraste (11) d'un dispositif de support (9) au moyen du dispositif de contrôle (16) porté par le transporteur auxiliaire (13) et alors que le dispositif de contrôle (16) se déplace d'une manière synchrone avec le transporteur d'alimentation (7) pendant une course opérationnelle.
